# EUROPEAN PATENT SPECIFICATION

(11) **EP 0 806 105 B1**
(45) Date of publication and mention of the grant of the patent: **28.04.2004**
(21) Application number: 96901598.1
(22) Date of filing: 22.01.1996
(51) Int. Cl.: H04M 3/56, H04N 7/15

(54) **TELECONFERENCE SYSTEM AT TELECOMMUNICATIONS SYSTEM, METHOD FOR ESTABLISHING OF TELECONFERENCE AND TELECONFERENCE EQUIPMENT FOR USE IN A TELECONFERENCE SYSTEM**
TELEKONFERENZSYSTEM IN TELEKOMMUNIKATIONSSYSTEM, VERFAHREN ZUM AUFBAU EINER TELEKONFERENZ UND TELEKONFERENZGERÄT ZUR ANWENDUNG IN EINEM TELEKONFERENZSYSTEM
SYSTEME DE TELECONFERENCE FAISANT APPEL A UN SYSTEME DE TELECOMMUNICATIONS, PROCEDURE POUR ETABLIR UNE TELECONFERENCE ET INSTALLATION POUR TELECONFERENCE UTILISABLE DANS UN SYSTEME DE TELECONFERENCE

(30) Priority: 26.01.1995 SE 9500266
(43) Date of publication of application: 12.11.1997
(73) Proprietor: TELIA AB, 126 80 Farsta (SE)
(72) Inventor: HAGSTRÖM, Bengt, S-136 80 HANINGE (SE)
(74) Representative: Hopfgarten, Nils
(86) International application number: PCT/SE1996/000058
(87) International publication number: WO 1996/023383

(56) References cited:
- EP-A- 0 351 757
- US-A- 4 736 407

## Description

### TECHNICAL FIELD

The present invention relates to a teleconference system where subscribers have possibility to establish contact with each other via in the system arranged connecting devices and connections according to the preamble of claim 1. Especially does the invention relate to a system where teleconferences can be established in a flexible and for the subscriber controllable way. The information which is transmitted consists of multimedia information, i.e. speech, video, data etc can be transmitted simultaneously between the different participants. The invention also relates to a teleconference equipment for use in such a system according to the preamble of claim 12.

### PRIOR ART

Teleconference systems of different kinds are previously known. The teleconference systems which are known and used in the public telephone networks are characterized by conferences being established via central equipments in the telecommunications networks. The number of conference participants is in this case restricted by the capacity of the teleconference equipment; further the number of possible conferences are restricted to the number of conference equipments which the telecommunications operator has installed in his network.

From patent document US5003532 it is previously known to arrange conference systems where individual connections are arranged between each of the conference equipments. This technique, however, is related to establishing of fixed connections between the different conference equipments. In the document an idea is presented of arranging a central unit which attends to the connection of the different conference participants. The information transmitted in this case relates to sound and picture.

In the patent document US4965819 a video conference system is described for example for a room in a court where each participant is not having a control unit.

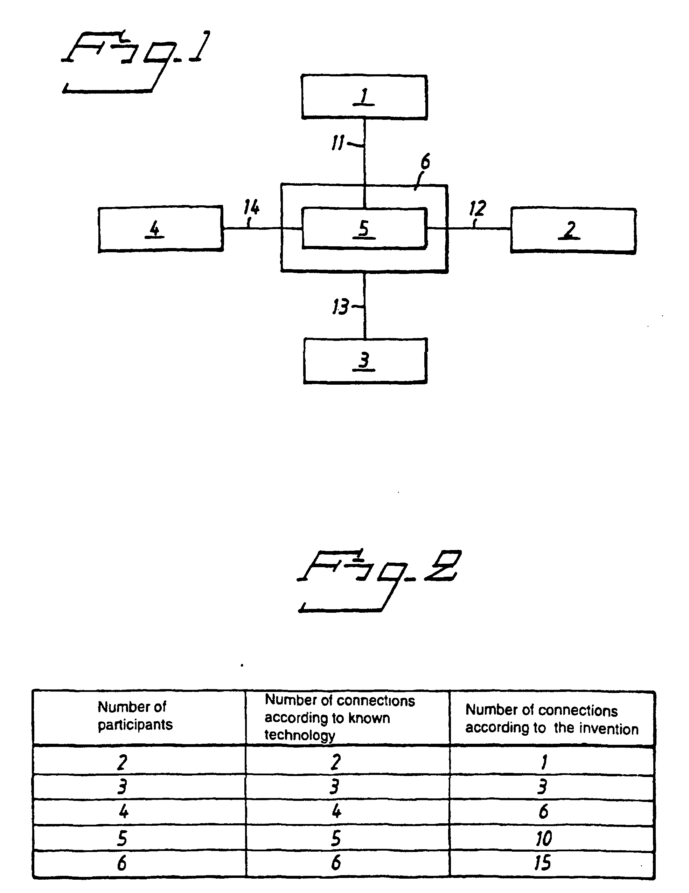

In the patent document US4805205 establishing of communication between geographically separated persons is described. A number of stations maintain communications between them. The stations communicate with each other. Figure 1 in the present application shows a network comprising five stations 1, 2, 3, 4, 5 arranged in a star configuration with a control station 5 connected to each other station 1, 2, 3, 4. The connection 11, 12, 13, 14 of the conference participants is in this case performed via central functions in the telecommunications network 6.

In patent document US4400724 a teleconference system is described with separate stations which are connected to each other via six links. The connections are in this case permanently connected.

US 4 736 407 discloses a telephone conferencing system between a plurality of subscribers. The conference equipments are adapted to individually call all other participants in a conference. Each conference equipment includes a modem having a receiver and a transmitter section for receiving and transmitting information from and to other subscribers. Computers of each conference equipment are provided to control the communication with other subscribers in accordance with self contained software or in response to a received command.

### DESCRIPTION OF THE INVENTION

### TECHNICAL PROBLEM

In future telecommunications network conferences of different kinds will to a greater extent be desirable and established. The teleoperators possibility to measure future need and wishes is limited. To establish permanent connections between different possible conference participants is an impossibility. The utilization of central conference equipments in the telecommunications systems is further restricted to the number of conference participants which respective equipment can serve. Further such a system is dictated by the teleoperator.
Possibilities for the conference participants themselves to decide which formats that shall be used are wanted to be considered to a greater extent. Further there is a need for the different participants to individually be able to receive different kinds of information from the different participants. This can be exemplified by a teleconference between a number of different participants including simultaneous transmission of different kinds of information. Each of the participants shall then have the possibility to select how the information is presented at each of the receiver places. Further, each of the receivers shall have the possibility to exclude certain information which is not relevant for the receiver place in question. At teleconference transmission video, sound, data information etc shall, accordingly, be transmitted unimpededly.

The conference system shall further be possible to use for multimedia information.

The system shall further be possible to use flexibly and not be dependent on the discretion of the teleoperator.

Further it is desirable that the teleoperator needs not provide expensive equipments in the telecommunications network. In telecommunications network which are established the costs for establishing of connections will be comparatively low, whereas equipments which are arranged in the network becomes comparatively expensive. With future digital technology and utilization of for instance fibre optic connections the possibilities to arrange a large number of connections will increase radically in the telecommunications network.

The present invention takes these conditions as a starting point.

### THE SOLUTION

The present invention proposes a teleconference system of the kind defined in the introductory portion of the description and having the characterizing features of claim 1.

Thus the present invention relates to a teleconference system which is connected to a telecommunications network. The connection in the telecommunications network is established by subscribers connected to the telecommunications network by indicating for instance call number. Call numbers can be given via key pads on for instance telephones. The transmitted information from the subscribers are received in the connecting devices in the telecommunications network which establish connections via which the subscribers can communicate with each other. In this way a subscriber can establish a contact with any subscriber in the telecommunications network. At least some of the subscriber equipments in the telecommunications network are arranged as conference equipments. The conference equipments are arranged to establish individual communication with every other conference equipment which is arranged to participate in a conference. Accordingly a number of individual connections are established between a first conference equipment and each of the rest of the conference equipments which participates in the conference. In a corresponding way connections are established between the other conference equipments.

Each of the conference equipments in the teleconference system is further equipped with transmission - and reception devices for transmission and reception respectively of information from/to the other conference equipments. Control devices in respective teleconference equipments further allow that an individual control of the conference can be achieved. It is consequently possible to present the information in different ways at each of the conference equipments independent of each other. The information which is transmitted between the different conference equipments preferably consists of so called multimedia information.

The teleconference system accordingly allows video conferences and audio conferences. The subscriber equipment includes editing equipment and combination equipment for editing and combination of received information from every other subscriber who participates in the teleconference. The editing equipment and the combination equipment can be programmed by the user for presentation of conference information to the user in one of a number of formats.

In a further development of the invention the mentioned editing device and combination device is preprogramable by the user to present conference information in a format constructed by the user. The control device is further arranged to initiate or at command from the users connect connections to a number of subscribers and to transmit identification codes for mentioned selected subscribers to each of the mentioned subscribers. The control device is further arranged to appoint which of the mentioned number of subscribers who shall initate communication links with other subscribers who participate in the conference equipment and to transmit identification codes to the subscribers as an individual subscriber must initiate in a communications link. The control device is further arranged to receive identification codes for the subscribers from a conference initiating equipment to establish connection to each of the selected subscribers and when connection has been established transmit connection signal to the mentioned initiated subscriber equipment.

Conference connection can for instance be established with the public telephone system or ISDN-network or broadband ISDN-networks etc.

The invention also relates to a teleconference equipment according to claim 12.

Thus reception devices for reception of data are arranged for simultaneous reception from a number of subscribers. Transmission devices for transmission of data to a number of subscribers, and control devices for communication with a number of other subscribers and established communication connections with a number of other subscribers are further provided. The conference equipment is arranged to be in charge of video communication and/or audio communication. The teleconference equipment is further equipped with a combination equipment for editing and combination of data received from participating subscribers in a teleconference. The editing device and the combination device are programable by a user to present conference information to the user in one out of a number of preprogrammed formats.

The editing equipment and the combination equipment can be preprogrammed to be used to present conference information to the user on format according to the user's own wishes. A control device is further arranged to, at command of the user, initiate connection to one out of a number of subscribers and to transmit identification codes for mentioned selected subscribers to each of the selected subscribers. The control device is further arranged to appoint which of the mentioned subscribers who shall initiate communication connections with other participating subscribers in a teleconference system and transmit identification codes to each of the subscribers and that respective subscriber individually initiates communication connection. The control devices are further arranged to receive identification codes for the selected subscribers and establish connections to each of the mentioned subscribers. When the connections have been established connection signal is transmitted.

The function of the system and equipment according for the thus includes the following steps for establishing of conference between a number of subscribers
- a first subscriber establishes connection with each of a number of subscribers selected in advance, and transmits to these selected subscribers an initiating signal identifying the participants, and
- at reception of said initiating signal each of said selected subscribers establishes a communication connection with the subscribers which are identified by the initiating signal.

Each of the subscribers decides the format on which the conference shall be presented to him.

Establishing of connections between participants is made over a public telecommunications network where the subscriber can order auomatic connection between just any subscribers in the telecommunications network.

### ADVANTAGES

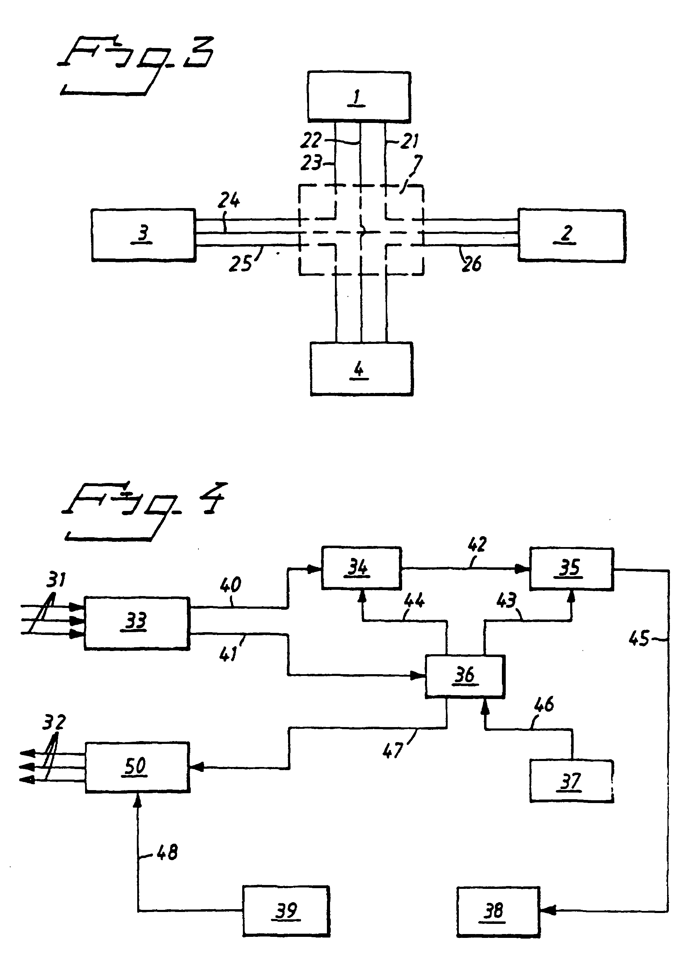

Conference systems according to the present invention uses more connections than the known technology according to Figure 1. In Figure 2 a table is shown where the number of connections according to the conventional technology and the here suggested technology is compared. The invention allows the participants in a teleconference to configure screens and control the conference in the way they want.

At transmission with large bandwidth such as optical fibre a number of necessary connections can be established which are not critical cost parameters.

The provision of expensive and complicated control equipments in the telephone stations is however cost critical. Distributed subscriber control is always cheaper and more flexible than a central control. A good analogy is to compare expensive central computers with PC-computers.

The present invention consequently has the advantage of being cheaper to arrange and operate than now used system. The invention further allows that the user has a bigger freedom.

The invention accordingly allows the subscriber to aquire conference equipment which is adapted just for his/her own need.

### DESCRIPTION OF FIGURES

Figure 1 shows a conventional teleconference system.
Figure 2 is a table which shows the number of necessary connections according to the conventional technology respective according to the present invention.
Figure 3 shows a schematic construction according to the invention.
In Figure 4 is shown the schematic construction of a subscriber equipment.

### DETAILED EMBODIMENT

In Figure 3 is shown a schematic presentation and the conference system according to the invention. In the illustrated example four participants 1, 2, 3 and 4 are arranged in a conference. A larger or smaller number of participants can also be allowed. The conference is established by arranging communication connections 21-26 between each pair of participants according to the following.

Participant 1 to 2 communication link 21.

Participant 1 to 3 communication link 23.

Participant 1 to 4 communication link 22.

Participant 2 to 3 communication link 24.

Participant 2 to 4 communikation link 26.

Participant 3 to 4 communication link 25.

The used subscriber equipment at each subscriber is shown schematically in Figure 4. Incoming data from each participant on the connections/channels 31 is received by receiver 33 and outgoing information for other participants is transmitted on the connections/channels 32. The subscriber equipment is controlled by a control unit 36 which can be programmed via the user console 37. Incoming data from the receiver 33 is distributed in the data- and signal control unit of the conference system and transmitted via the lines 40 and 41 to a mixer unit 34 and control unit 36. The mixer unit 34 combines signals which are received from the conference participants in the way which is decided by the control unit 36. The formatted video signal passes the video display 38 over the connection 45. The camera microphone unit 39 transmits data for transmission to transmitter 50 via line 48. A conference system according to the present invention can provide multimedia facilities. It can also be used together with telefax equipment, PCs and VCRs in a way that documetary information created in PCs and also on video tape can be shown during present conference.

The control unit 36 can be programmed to present each participant with incoming data which each transmits in any format independent of which formats other participants utilize- The shown format can be decided by the user or selected from a programmed menu of formats. The video formatting is obtained by signal processing performed by the combination unit 34 and the editor 35.

Connections used between different participants are partly decided by the type of the conference, i.e. video or audio and the wished picture quality at video conferences. The communication links can be physical links established over optical fibres, coaxial cabels or at audio conferences ordinary physical connections. At most communications media the connections are established via channels in the form of multiplex. virtual links established over packet switch network can also be used provided the delays are well controlled.

An important aspect for each conference system which operates over the telecommunications network is to process the use at established connections. The control unit 36, in the present invention, initiates the subscriber unit, the control unit and the conference set. The control unit in the subscriber equipment 1, see Figure 3, transmits a signal to each the other participants and informs them about the connections which shall be established. For instance the connections 21, 22 and 23 for connection towards subscriber 1 and initiates the control unit of the subscriber by transmitting a signal to subscriber 2 and instruct him/her to establish connections with subscriber 3 and 4 and a signal to subscriber 3 instructs him/her to establish a connection with subscriber 4. Subscriber 4 will have all connections established via other subscribers.
When establishing a video conference the subscriber 1 according to Figure 3 calls the telecommunications network 7. The telecommunications network which is a conventional telecommunications network with possibility to connect different subscribers, receives information on for instance connection 23. On this connection the subscriber 1 transfers the call number to subscriber 3. Connecting devices in the telecommunications network then establish call to subscriber 3. When the subscriber 3 answers the call the connection 23 is connected between subscriber 1 and 3. Information is then transmitted between subscriber 1 and 3 regarding the establishing of the conference. The information which is transmitted is among other things information regarding which other participants who shall participate in the conference and a request that subscriber 3 establishes connection with other participants in the conference. In a corresponding way are after that communication links established between each of the conference equipments 1, 2, 3, and 4. When all connections have been established and the participants have configured their equipments according to their wishes and needs the conference starts. The presentation of the information which is transmitted between respective conference equipments can accordingly be individually configured. Further different kinds of information can be transmitted individually between individual conference equipments or to all conference equipments.

In the above mentioned description the conference system has been described from the starting point of a conventional public telecommmunications network. The mentioned telecommunications network can of course consist of different kinds of telephone networks such as an ordinary telephone network, a data network or other, allowed in an automatic and by the subscriber controlled way.

## Claims

1. Teleconference system comprising a telecommunications network which comprises connecting devices arranged to establish communications between any subscriber equipments in the telecommunications network (7) where at least some of the subscriber equipments are also arranged as conference equipments, arranged to establish individual communication between every other conference equipment, each of the conference equipments being provided with transmission (50) and reception (33) devices for transmission and reception respectively of information to/from the other conference equipments, and control devices (36) being provided to initiate or at command from a user set up connections to a number of subscribers having conference equipments, **characterized in that**, when establishing of teleconference between a number of subscribers, the control device (36) of the conference equipment of a first subscriber (1) is adapted to establish connections (21,22,23) with each of a number of other subscribers (2,3,4) selected in advance among subscribers having conference equipments to transmit to these selected subscribers an initiating signal identifying participants of the conference, and **in that** at reception of said initiating signal the control devices (36) of each of said selected subscribers are adapted to establish a communication connection with subscribers who are identified by said initiating signal.

2. Teleconference system according to claim 1, **characterized in that** a control device (36) is arranged in each of the teleconference equipments for individual control of the conference.

3. Teleconference system according to claims 1 or 2, **characterized in that** transmitted information comprises multimedia information.

4. Teleconference system according to claims 1 or 2, **characterized in that** the teleconference system is arranged for video conferences.

5. Teleconference system according to claims 1 or 2, **characterized in that** the teleconference system is arranged for audio conferences.

6. Teleconference system according to claim 1, **characterized in that** said subscriber equipment includes an editing device (35) and combination device (34) for editing and combination of received data from every other subscriber who participates in the teleconference.

7. Teleconference system according to claim 6, **characterized in that** said editing device (35) and combination device (34) are programmable by the user to present conference information in one of a number of preprogrammed formats.

8. Teleconference system according to claims 6 or 7, **characterized in that** said editing device (35) is programmable by the user to present conference information in a format constructed by the user.

9. Teleconference system according to claim 8, **characterized in that** the control device (36) is adapted to upon receipt of said initiating signal, initiate communication links (21-26) with other subscribers who participate in the teleconference and transmit identification codes to the subscribers regarding communication links which an individual subscriber must initiate.

10. Teleconference system according to any of the previous claims, **characterized in that** said control device (36) is arranged to receive identification codes for the subscribers (1,2,3,4) from the conference equipment of a conference initiating subscriber (1) to establish connection to each of said selected subscribers and, when connection has been established, to transmit a connection signal to said initiating subscriber (1).

11. Teleconference system according to any of the previous claims, **characterized in that** conference connection is established with a public telephone network or ISDN-network or broadband ISDN-network.

12. Teleconference equipment for use in a teleconference system comprising a telecommunications network which comprises connecting devices arranged to establish communication between any subscriber equipments in the telecommunications network (7) where at least some of he subscriber equipments are arranged also as teleconference equipments, said teleconference equipments being arranged to establish individual communication between every other teleconference equipment each teleconference, equipment comprising a receiving device (33) for reception of data arranged for simultaneous reception from a number of other subscribers, a transmission device (50) for transmission of data to a number of subscribers, and a control device (36) for communication with a number of other subscribers and establishing of communication connections with a number of other subscribers, **characterized in that** the control device of a first subscriber (1) is adapted to establish connection (21,22,23) with each of a number of other subscribers (2,3,4) selected in advance and transmit to these selected subscribers an initiating signal identifying participants of the conference,and **in that** the control devices (36) of said other subscribers (2,3,4) are adapted to receive identification codes for the selected other subscribers to establish connections to each of said other subscribers and, when the connection has been established, transmit a connection signal.

13. Teleconference equipment according to claim 12, **characterized in that** said teleconference equipment is arranged to manage video communication.

14. Teleconference equipment according to claim 12, **characterized in that** said teleconference equipment is arranged to manage audio communication.

15. Teleconference equipment according to claim 14, **characterized in that** it is equipped with editing equipment (35) and combination equipment (34) for editing and combination of data received from participating subscribers (1,2,3,4) of a teleconference.

16. Teleconference equipment according to claim 15, **characterized in that** said editing equipment (35) and combination equipment (34) are programmable by a user to present conference information to the user in one of a number of formats, programmed in advance.

17. Teleconference equipment according to claims 15 or 16, **characterized in that** said editing equipment (35) and said combination equipment (34) are programmed in advance by the user to present conference information to the user in a format according to the user 's own wishes.

18. Teleconference equipment according to any of claims 12 -17, **characterized in that** said control device (36) is arranged to, at command of the user, initiate connection to said selected other subscribers and transmit identification codes for said selected subscribers to each of the selected subscribers.

19. Teleconference equipment according to claim 18, **characterized in that** said control device is arranged to decide which of said subscribers shall initiate communication connections with other participating subscribers in a teleconference system and transmit identification codes to each of said participating subscribers, the respective participating subscriber individually initiating communication connections.

## Patentansprüche

1. Telekonferenzsystem mit einem Telekommunikationsnetz, das Anschlußvorrichtungen zur Herstellung von Kommunikationen zwischen beliebigen Teilnehmereinrichtungen im Telekommunikationsnetz (7) umfaßt, wobei mindestens einige der Teilnehmereinrichtungen auch als Konferenzeinrichtungen zur Herstellung von Einzelkommunikation zwischen jeder anderen Konferenzeinrichtung angeordnet sind, wobei jede der Konferenzeinrichtungen mit Übertragungs-(50) und Empfangs-(33) Vorrichtungen zur Übertragung bzw. zum Empfangen von Informationen zu/von den anderen Konferenzeinrichtungen vorgesehen sind und Steuervorrichtungen (36) vorgesehen sind, um Verbindungen zu einer Anzahl von Teilnehmern mit Konferenzeinrichtungen einzuleiten oder auf Befehl von einem Benutzer aufzubauen, **dadurch gekennzeichnet, daß** bei der Herstellung einer Telekonferenz zwischen einer Anzahl von Teilnehmern die Steuervorrichtung (36) der Konferenzeinrichtung eines ersten Teilnehmers (1) zur Herstellung von Verbindungen (21, 22, 23) mit jedem einer Anzahl von anderen Teilnehmern (2, 3, 4) geeignet ist, die im voraus unter Teilnehmern mit Konferenzeinrichtungen ausgewählt worden sind, um zu diesen ausgewählten Teilnehmern ein Einleitungssignal zu übertragen, das Teilnehmer an der Konferenz identifiziert, und daß bei Empfang des Einleitungssignals die Steuervorrichtungen (36) jedes der ausgewählten Teilnehmer eine Kommunikationsverbindung mit Teilnehmern herstellen kann, die durch das Einleitungssignal identifiziert werden.

2. Telekonferenzsystem nach Anspruch 1, **dadurch gekennzeichnet, daß** eine Steuervorrichtung (36) in jeder der Telekonferenzeinrichtungen zur Einzelsteuerung der Konferenz angeordnet ist.

3. Telekonferenzsystem nach Ansprüchen 1 oder 2, **dadurch gekennzeichnet, daß** übertragene Informationen Multimediainformation umfassen.

4. Telekonferenzsystem nach Ansprüchen 1 oder 2, **dadurch gekennzeichnet, daß** das Telekonferenzsystem für Videokonferenzen angeordnet ist.

5. Telekonferenzsystem nach Ansprüchen 1 oder 2, **dadurch gekennzeichnet, daß** das Telekonferenzsystem für Audiokonferenzen angeordnet ist.

6. Telekonferenzsystem nach Anspruch 1, **dadurch gekennzeichnet, daß** die Teilnehmereinrichtung eine Editiervorrichtung (35) und eine Kombiniervorrichtung (34) zum Editieren und Kombinieren empfangener Daten von jedem anderen an der Telekonferenz teilnehmenden Teilnehmer enthält.

7. Telekonferenzsystem nach Anspruch 6, **dadurch gekennzeichnet, daß** die Editiervorrichtung (35) und Kombiniervorrichtung (34) vom Benutzer programmierbar sind, um Konferenzinformationen in einem von einer Anzahl von vorprogrammierten Formaten darzustellen.

8. Telekonferenzsystem nach Ansprüchen 6 oder 7, **dadurch gekennzeichnet, daß** die Editiervorrichtung (35) vom Benutzer programmierbar ist, um Konferenzinformationen in einem vom Benutzer aufgebauten Format darzustellen.

9. Telekonferenzsystem nach Anspruch 8, **dadurch gekennzeichnet, daß** die Steuervorrichtung (36) bei Empfang des Einleitungssignals Kommunikationsverbindungen (21-26) mit anderen an der Telekonferenz teilnehmenden Teilnehmern einleiten und Identifizierungscodes zu den Teilnehmern hinsichtlich der Kommunikationsverbindungen, die ein einzelner Teilnehmer einleiten muß, übertragen kann.

10. Telekonferenzsystem nach einem der vorhergehenden Ansprüche, **dadurch gekennzeichnet, daß** die Steuervorrichtung (36) Kennzeichnungscodes für die Teilnehmer (1, 2, 3, 4) von der Konferenzeinrichtung eines eine Konferenz einleitenden Teilnehmers (1) empfangen kann, um eine Verbindung zu jedem der ausgewählten Teilnehmer herzustellen und um, wenn die Verbindung hergestellt worden ist, ein Verbindungssignal zu dem einleitenden Teilnehmer (1) zu übertragen.

11. Telekonferenzsystem nach einem der vorhergehenden Ansprüche, **dadurch gekennzeichnet, daß** die Konferenzverbindung mit einem öffentlichen Fernsprechnetz oder ISDN-Netz oder Breitband-ISDN-Netz hergestellt wird.

12. Telekonferenzeinrichtung zur Verwendung in einem Telekonferenzsystem mit einem Telekommunikationsnetz, das Verbindungsvorrichtungen zur Herstellung von Kommunikation zwischen beliebigen Teilnehmereinrichtungen im Telekommunikationsnetz (7) umfaßt, wobei mindestens einige der Teilnehmereinrichtungen auch als Telekonferenzeinrichtungen angeordnet sind, wobei diese Telekonferenzeinrichtungen zur Herstellung von Einzelkommunikation zwischen jeder anderen Telekonferenzeinrichtung angeordnet sind, wobei jede Telekonferenzeinrichtung eine Empfangsvorrichtung (33) zum Empfang von Daten, die für den gleichzeitigen Empfang von einer Anzahl anderer Teilnehmer angeordnet sind, eine Übertragungsvorrichtung (50) zur Übertragung von Daten zu einer Anzahl von Teilnehmern und eine Steuervorrichtung (36) zur Kommunikation mit einer Anzahl anderer Teilnehmer und Herstellung von Kommunikationsverbindungen mit einer Anzahl anderer Teilnehmer umfaßt, **dadurch gekennzeichnet, daß** die Steuervorrichtung eines ersten Teilnehmers (1) eine Verbindung (21, 22, 23) mit jedem einer Anzahl von anderen, im voraus ausgewählten Teilnehmern (2, 3, 4) herstellen und zu diesen ausgewählten Teilnehmern ein Teilnehmer an der Konferenz identifizierendes Einleitungssignal übertragen kann, und daß die Steuervorrichtungen (36) der anderen Teilnehmer (2, 3, 4) Identifizierungscodes für die ausgewählten anderen Teilnehmer empfangen können, um Verbindungen zu jedem der anderen Teilnehmer herzustellen und, wenn die Verbindung hergestellt worden ist, ein Verbindungssignal zu übertragen.

13. Telekonferenzeinrichtung nach Anspruch 12, **dadurch gekennzeichnet, daß** die Telekonferenzeinrichtung zur Verwaltung von Videokommunikation angeordnet ist.

14. Telekonferenzeinrichtung nach Anspruch 12, **dadurch gekennzeichnet, daß** die Telekonferenzeinrichtung zur Verwaltung von Audiokommunikation angeordnet ist.

15. Telekonferenzeinrichtung nach Anspruch 14, **dadurch gekennzeichnet, daß** sie mit einer Editiereinrichtung (35) und einer Kombiniereinrichtung (34) zum Editieren und Kombinieren von von an einer Telekonferenz teilnehmenden Teilnehmern (1, 2, 3, 4) empfangenen Daten ausgerüstet ist.

16. Telekonferenzeinrichtung nach Anspruch 15, **dadurch gekennzeichnet, daß** die Editiereinrichtung (35) und Kombiniereinrichtung (34) von einem Benutzer programmierbar sind, um Konferenzinformationen für den Benutzer in einem von einer Anzahl von im voraus programmierten Formaten darzustellen.

17. Telekonferenzeinrichtung nach Ansprüchen 15 oder 16, **dadurch gekennzeichnet, daß** die Editiereinrichtung (35) und Kombiniereinrichtung (34) im voraus vom Benutzer programmiert werden, um Konferenzinformation für den Benutzer in einem Format entsprechend den eigenen Wünschen des Benutzers darzustellen.

18. Telekonferenzeinrichtung nach einem der Ansprüche 12-17, **dadurch gekennzeichnet, daß** die Steuervorrichtung (36) auf Befehl des Benutzers eine Verbindung zu den ausgewählten anderen Teilnehmern einleiten und Identifizierungscodes für die ausgewählten Teilnehmer zu jedem der ausgewählten Teilnehmer übertragen kann.

19. Telekonferenzeinrichtung nach Anspruch 18, **dadurch gekennzeichnet, daß** die Steuervorrichtung entscheiden kann, welcher der Teilnehmer Kommunikationsverbindungen mit anderen teilnehmenden Teilnehmern an einem Telekonferenzsystem einleiten und Identifizierungscodes zu jedem der teilnehmenden Teilnehmer übertragen soll, wobei der jeweilige teilnehmende Teilnehmer einzeln die Kommunikationsverbindungen einleitet.

## Revendications

1. Système de téléconférence comprenant un réseau de télécommunications qui comporte des dispositifs de connexion agencés pour établir des communications entre des équipements d'abonné quelconques dans le réseau de télécommunications (7), au moins certains des équipements d'abonné étant également agencés comme équipements de conférence, prévu pour établir une communication individuelle entre chaque autre équipement de conférence, chacun des équipements de conférence étant pourvu de dispositifs d'émission (50) et de réception (33) pour émission et réception respectivement d'informations à destination / en provenance des autres équipements de conférence, et des dispositifs de commande (36) étant prévus pour démarrer ou, sur ordre d'un utilisateur, établir des connexions avec un certain nombre d'abonnés ayant des équipements de conférence, **caractérisé en ce que**, lors de l'établissement d'une téléconférence entre un certain nombre d'abonnés, le dispositif de commande (36) de l'équipement de conférence d'un premier abonné (1) est prévu pour établir des connexions (21, 22, 23) avec chacun d'une pluralité d'autres abonnés (2, 3, 4), sélectionnés préalablement parmi les abonnés ayant des équipements de conférence, pour transmettre, à ces abonnés sélectionnés, un signal de démarrage identifiant les participants à la conférence, et **en ce que**, à réception du dit signal de démarrage, les dispositifs de commande (36) de chacun des dits abonnés sélectionnés sont prévus pour établir une connexion de communication avec les abonnés qui sont identifiés par le dit signal de démarrage.

2. Système de téléconférence selon la revendication 1, **caractérisé en ce qu'**un dispositif de commande (36) est agencé dans chacun des équipements de téléconférence pour la commande individuelle de la conférence.

3. Système de téléconférence selon les revendications 1 ou 2, **caractérisé en ce que** des informations transmises comprennent des informations multimédia.

4. Système de téléconférence selon les revendications 1 ou 2, **caractérisé en ce que** le système de téléconférence est prévu pour des vidéo-conférences.

5. Système de téléconférence selon les revendications 1 ou 2, **caractérisé en ce que** le système de téléconférence est prévu pour des audio-conférences.

6. Système de téléconférence selon la revendication 1, **caractérisé en ce que** le dit équipement d'abonné comprend un dispositif d'édition (35) et un dispositif de combinaison (34) pour éditer et combiner des données reçues en provenance de chaque autre abonné qui participe à la téléconférence.

7. Système de téléconférence selon la revendication 6, **caractérisé en ce que** le dit dispositif d'édition (35) et le dit dispositif de combinaison (34) sont programmables par l'utilisateur pour présenter des informations de conférence dans l'un d'une pluralité de formats préprogrammés.

8. Système de téléconférence selon les revendications 6 ou 7, **caractérisé en ce que** le dit dispositif d'édition (35) est programmable par l'utilisateur pour présenter des informations de conférence dans un format construit par l'utilisateur.

9. Système de téléconférence selon la revendication 8, **caractérisé en ce que** le dispositif de commande (36) est prévu pour démarrer, lors de la réception du dit signal de démarrage, des liaisons de communication (21 - 26) avec d'autres abonnés qui participent à la téléconférence, et transmettre des codes d'identification aux abonnés en ce qui concerne les liaisons de communication qu'un abonné individuel doit démarrer.

10. Système de téléconférence selon une quelconque des revendications précédentes, **caractérisé en ce que** le dit dispositif de commande (36) est prévu pour recevoir des codes d'identification pour les abonnés (1, 2, 3, 4), en provenance de l'équipement de conférence d'un abonné (1) démarrant une conférence, afin d'établir une connexion à chacun des dits abonnés sélectionnés et, lorsque la connexion a été établie, pour transmettre un signal de connexion au dit abonné de démarrage (1).

11. Système de téléconférence selon une quelconque des revendications précédentes, **caractérisé en ce que** la connexion de conférence est établie avec un réseau de téléphone public, ou un réseau ISDN, ou un réseau ISDN à large bande.

12. Equipement de téléconférence utilisable dans un système de téléconférence comprenant un réseau de télécommunications qui comporte des dispositifs de connexion agencés pour établir une communication entre des équipements d'abonné quelconques dans le réseau de télécommunications (7), au moins certains des équipements d'abonné étant prévus également comme équipements de téléconférence, les dits équipements de téléconférence étant prévus pour établir une communication individuelle entre chaque autre équipement de téléconférence, chaque équipement de téléconférence comprenant un dispositif de réception (33) pour réception de données prévu pour une réception simultanée en provenance d'une pluralité d'autres abonnés, un dispositif d'émission (50) pour émission de données vers une pluralité d'abonnés, et un dispositif de commande (36) pour communication avec une pluralité d'autres abonnés et établissement de connexions de communications avec une pluralité d'autres abonnés, **caractérisé en ce que** le dispositif de commande d'un premier abonné (1) est prévu pour établir une connexion (21, 22, 23) avec chacun d'une pluralité d'abonnés (2, 3, 4) préalablement sélectionnés, et pour transmettre à ces abonnés sélectionnés un signal de démarrage identifiant les participants à la conférence, et **en ce que** les dispositifs de commande (36) des dits autres abonnés (2, 3, 4) sont prévus pour recevoir des codes d'identification pour les autres abonnés sélectionnés, afin d'établir des connexions à chacun des dits autres abonnés, et, lorsque la connexion a été établie, pour transmettre un signal de connexion.

13. Equipement de téléconférence selon la revendication 12, **caractérisé en ce que** le dit équipement de téléconférence est prévu pour gérer une communication vidéo.

14. Equipement de téléconférence selon la revendication 12, **caractérisé en ce que** le dit équipement de téléconférence est prévu pour gérer une communication audio.

15. Equipement de téléconférence selon la revendication 14, **caractérisé en ce qu'**il est pourvu d'un équipement d'édition (35) et d'un équipement de combinaison (34) pour éditer et combiner des données reçues d'abonnés (1, 2, 3, 4) participant à une téléconférence.

16. Equipement de téléconférence selon la revendication 15, **caractérisé en ce que** le dit équipement d'édition (35) et le dit équipement de combinaison (34) sont programmables par un utilisateur pour présenter des informations de conférence à l'utilisateur dans un d'une pluralité de formats, programmés à l'avance.

17. Equipement de téléconférence selon les revendications 15 ou 16, **caractérisé en ce que** le dit équipement d'édition (35) et le dit équipement de combinaison (34) sont programmés à l'avance par l'utilisateur pour présenter les informations de conférence à l'utilisateur dans un format conforme aux propres souhaits de l'utilisateur.

18. Equipement de téléconférence selon une quelconque des revendications 12 à 17, **caractérisé en ce que** le dit dispositif de commande (36) est prévu pour démarrer, sur ordre de l'utilisateur, une connexion aux dits autres abonnés sélectionnés et pour transmettre des codes d'identification des dits abonnés sélectionnés à chacun des abonnés sélectionnés.

19. Equipement de téléconférence selon la revendication 18, **caractérisé en ce que** le dit dispositif de commande est agencé pour décider de celui des dits abonnés qui démarrera les connexions de communication avec les autres abonnés participants dans un système de téléconférence et pour transmettre des codes d'identification à chacun des dits abonnés participants, l'abonné participant respectif démarrant individuellement des connexions de communication.
